# EUROPEAN PATENT SPECIFICATION

(11) **EP 4 440 060 B1**
(45) Date of publication and mention of the grant of the patent: **04.03.2026**
(21) Application number: 24166723.7
(22) Date of filing: 27.03.2024
(51) Int. Cl.: H04L 41/0631, H04L 41/16, H04L 41/40

(54) **METHOD FOR DETECTING ANOMALIES IN AN INFRASTRUCTURE FOR NETWORK FUNCTION VIRTUALIZATION**
VERFAHREN ZUM ERKENNEN VON ANOMALIEN IN EINER INFRASTRUKTUR ZUR VIRTUALISIERUNG VON NETZWERKFUNKTIONEN
PROCÉDÉ DE DÉTECTION D'ANOMALIE DANS UNE INFRASTRUCTURE POUR VIRTUALISATION DE FONCTIONS RÉSEAU

(30) Priority: 30.03.2023 IT 202300006180
(43) Date of publication of application: 02.10.2024
(73) Proprietor: Vodafone Italia S.p.A., 10015 Ivrea (TO) (IT); Scuola Superiore di Studi Universitari e di Perfezionamento Sant'Anna, 56127 Pisa (IT)
(72) Inventor: Artale, Antonino, 10015 Ivrea TO (IT); Cucinotta, Tommaso, 56127 Pisa PI (IT); Vannucci, Marco, 56127 Pisa PI (IT); Derstepanians, Arman, 56127 Pisa PI (IT); Fichera, Silvia, 10015 Ivrea TO (IT); Lahiri, Sourav, 10015 Ivrea TO (IT); Avhad, Kiran Sahebrao, 10015 Ivrea TO (IT)
(74) Representative: Perani & Partners S.p.A.

(56) References cited:
- EP-A1- 3 772 833
- CN-A- 114 039 758
- NTAMBU PETER ET AL: "Machine Learning-Based Anomalies Detection in Cloud Virtual Machine Resource Usage", 2021 1ST INTERNATIONAL CONFERENCE ON MULTIDISCIPLINARY ENGINEERING AND APPLIED SCIENCE (ICMEAS), IEEE, 15 July 2021 (2021-07-15), pages 1 - 6, XP034079261, DOI: 10.1109/ICMEAS52683.2021.9692308
- DIAMANTI ALESSIO ET AL: "An AI-Empowered Framework for Cross-Layer Softwarized Infrastructure State Assessment", IEEE TRANSACTIONS ON NETWORK AND SERVICE MANAGEMENT, IEEE, vol. 19, no. 4, 23 March 2022 (2022-03-23), pages 4434 - 4448, XP011933793, DOI: 10.1109/TNSM.2022.3161872

## Description

### Technical field

The present invention relates to a method for detecting anomalies in an infrastructure for Network Function Virtualization. This method is particularly used in connection with the management operations of telephony infrastructure.

### State of the background art

Infrastructures for Network Function Virtualization (NFV infrastructures) are known in the literature. In particular, the term Network Function Virtualization refers to an architectural approach which leverages information technologies to virtualize network services. That is, the term Network Function Virtualization refers to a network approach which allows hardware devices such as routers and firewalls to be replaced with network applications and functions which are software-based and function as virtual machines or groups of virtual machines (VM machines) on standard servers. The term Network Function Virtualization also refers to lightweight virtualization methods such as those at the operating system level, also called container systems or virtual instances.

In more detail, through the NFV infrastructure, network features become software applications called virtual network functions (VNFs) which can be instantiated on a server. That is, the VNFs are implemented within the NFV infrastructure in the form of software which runs within different virtual machines or containers.

An NFV infrastructure comprises computational elements, storage and network elements, manageable by means of a commercial specialized software comprising a plurality of metrics, i.e. parameters, relating to different components of the infrastructure, such as CPUs, RAM, networks, datastores, mass memory units, FileSystems.

It is also known that for optimal operation of an NFV infrastructure it is necessary to carry out appropriate management of the infrastructure, detecting in a short time the presence of any anomalies.

In the prior art, the detection of anomalies in an NFV infrastructure takes place by means of models based on exceeding predetermined thresholds. In particular, these models provide for monitoring the values associated with a given parameter related to the infrastructure. Consequently, these models provide for generating an alarm signal when a predetermined threshold is exceeded, for a consecutive number of observation windows, by the values associated with the respective parameter.

Systems for anomaly detection that exploit an Isolation Forest-type algorithm, based on a plurality of Decision Tree-type learning algorithms, are known in the art. An example of application of the aforementioned algorithm is shown in the document "Ntambu Peter Et Al.: Machine Learning-Based Anomalies Detection in Cloud Virtual Machine Resource Usage, 2021".

Also known in the state of the art, and in particular from EP 3772833 A1, is a method for identifying the behavioural modes of data related to an NFV infrastructure based on the use of a Self-Organizing Map neural network.

### Problems of the background art

However, the known algorithms are based on the evaluation of point values of the monitored parameter, without considering its time evolution. In particular, the Isolation Forest algorithm does not allow for detecting temporally consecutive anomalies, whose values fall within the distribution of values of a regular day. In more detail, such an algorithm easily identifies cases where an anomaly deviates significantly from a regular sample distribution range, but does not identify an anomaly whose values fall within the distribution range. Furthermore, this algorithm also identifies as anomalous values those values that fall near the extremes of the distribution range of the variability of the samples. samples.

EP 3 772 833A1, discloses a method for analysing the daily behavioural patterns of a plurality of metrics of a Network Function Virtualisation (NFV) infrastructure using a Self-Organising Map neural network. The analysis is carried out essentially offline, i.e., a posteriori, after a plurality of samples have been acquired for all the metrics, by evaluating the discrete point values of the metrics and identifying which samples are not in the probability distribution of the samples.

Document D2, NTAMBU PETER ET AL: "Machine Learning-Based Anomalies Detection in Cloud Virtual Machine Resource Usage", 2021 1ST INTERNATIONAL CONFERENCE ON MULTIDISCIPLINARY ENGINEERING AND APPLIED SCIENCE (ICMEAS), IEEE, 15 July 2021 (2021-07-15), pages 1-6, XP034079261, DOI: 10.1109/ ICMEAS52683.2021.9692308 [retrieved on 2022-01-24], discloses a method of multivariate analysis of resource consumption samples (including CPU, memory etc) using, for example, an Isolation Forest algorithm, in order to identify behavioural anomalies of the metrics, which exceed a certain threshold.

### Summary of the invention

In this context, the technical task underlying the present invention is to provide a method for detecting anomalies in an infrastructure for Network Function Virtualization which overcomes the drawbacks of the background art.

In particular, it is an object of the present invention to propose a method that allows detection of point anomalies in a timely manner or in the time evolution of metrics representative of an infrastructure.

The specified technical task and the specified objects are substantially achieved by a method for detecting anomalies in an infrastructure for Network Function Virtualization comprising the technical specifications set out in one or more of the appended claims.

### Advantages of the invention

By means of a preferred embodiment of the invention, it is possible to exploit an algorithm for the detection of anomalies in order to monitor in a time window the time evolution of metrics associated with the NFV infrastructure. Advantageously, the anomalies detected are associated both with values beyond a predetermined threshold and with values whose time evolution deviates from a reference evolution. In detail, with respect to the prior art described above, and with particular reference to EP 3772833 A1, the method of the present invention allows both the point values of the metrics associated with the NFV infrastructure, and the variation over time thereof to be taken into account. In other words, the method of the present invention allows the values of the metrics with the respective time behaviour to be interrelated, so as to have a broader and more complete view of the anomalies.

By means of a preferred embodiment of the invention, it is possible to reduce the time for detecting any anomalies in the infrastructure, by integrating and combining one or more anomaly detection techniques, data dimension reduction techniques, and anomaly categorization techniques.

By means of a preferred embodiment of the invention, it is possible to detect anomalies in the NFV infrastructure with a reduced computational overhead, i.e. the use of accessory resources. Advantageously, it is therefore possible to detect anomalies in the infrastructure in almost real time in order to alert the operators of the infrastructure and/or hosted services in a timely manner, in order to accelerate the resolution of any infrastructure problems.

### BRIEF DESCRIPTION OF THE DRAWINGS

Further characteristics and advantages of the present invention will become more apparent from the exemplary, and therefore non-limiting, description of a preferred but not exclusive embodiment of a method for detecting anomalies in an infrastructure for Network Function Virtualization, as illustrated in the appended drawings, in which:

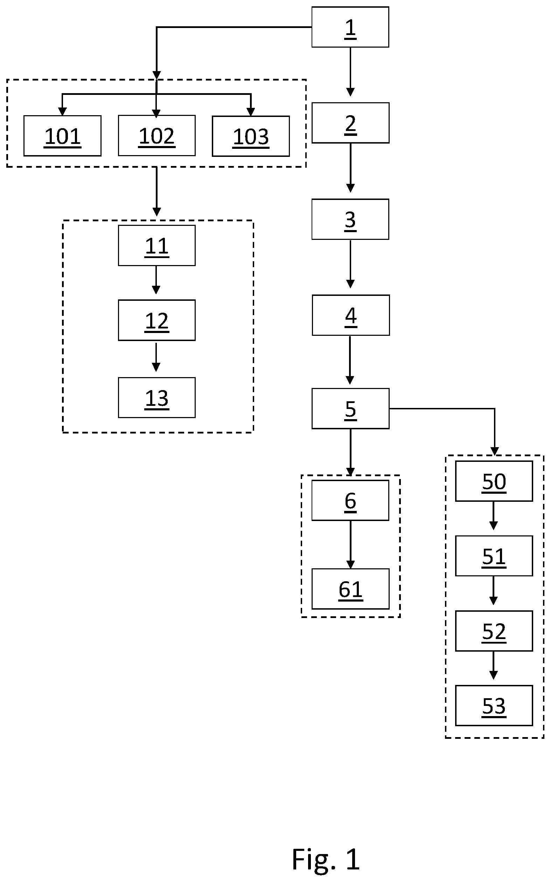

- Figure 1 is a schematic representation of the main steps of the method.

### DETAILED DESCRIPTION

The present invention relates to a method for detecting anomalies in a Network Function Virtualization (NFV) infrastructure. In particular, this method allows an almost real-time detection of anomalies, in order to notify the operators of the infrastructure and/or hosted services in a timely manner and to accelerate the resolution of any problems before they impact end users.

Specifically, the present invention relates to a method for detecting anomalies in an NFV infrastructure comprising the following steps, carried out according to a preferred embodiment and shown in Figure 1.

The method comprises the step of providing 1 a database containing historical infrastructure management data, acquired in a plurality of consecutive sampling time windows. Each sampling time window comprises a plurality of consecutive data points. Preferably, as further detailed below, the historical infrastructure management data comprises system data relating to the use of infrastructure resources, application data relating to infrastructure components, topological allocation data, or a combination thereof.

The step of providing 1 a database containing historical management data comprises the sub-step of defining 11 a plurality of metrics, also called parameters, relating to the historical management data of the infrastructure. Preferably, the plurality of metrics comprises at least a set of system metrics, a set of application metrics, and a set of topological allocation metrics relating to the system data, the application data, and the topological allocation data, respectively.

The method thus comprises the step of providing 2 a control unit in signal communication with the database; Preferably, the control unit is a computer-data processor, i.e. a computer, fixed or portable. Alternatively, the control unit is a server, preferably provided in a cloud infrastructure for remote data management.

The method comprises the step of providing 3 an anomaly detection algorithm based in the control unit. The anomaly detection algorithm comprises a vector-based Isolation Forest-type algorithm, which preferably comprises a plurality of oblique decision tree-type learning algorithms. In detail, the vector-based IF algorithm preferably provides for generating a plurality of algorithm instances on the basis of parameter data, wherein the instances are generated starting from the random variation of said parameters. Still preferably, such instances acan be combined in order to achieve a more robust anomaly detection algorithm.

In the scope of the present invention, decision tree means a supervised learning algorithm constructed on the basis of a hierarchical structure. As an example, a decision tree can be used to discern between the data provided, values above or below a threshold value within the range of variability of the data. In particular, an oblique decision tree means a decision tree in which the division criteria are based on a linear combination of the input metrics.

For the purposes of the present description, an algorithm of the Isolation Forest type means an unsupervised algorithm for anomaly detection and isolation, based on successive binary decision trees. In detail, the algorithm is constructed from a plurality of decision trees, trained on at least one time window, in order to detect a point value above or below a threshold. Specifically, vector-based Isolation Forest-type algorithm means a modified IF-type algorithm, which is configured to receive input data vectors and not data associated with individual data points.

It should be noted that, unlike an Isolation Forest algorithm, by which it is only possible to detect anomalies associated with point values above or below a certain threshold, the vector-based Isolation Forest algorithm also allows anomalies associated with the time evolution of the values to be detected. In more detail, the vector-based IF algorithm can be either of the Random Forest Classifier type or the Random Forest Regression type.

It should also be noted that the vector-based IF algorithm allows for detecting anomalies in Near Real Time, as the use of a limited number of metrics to be analysed allows for a quick and efficient applicability of the algorithm and, therefore, the operators of the infrastructure and/or hosted services to be alerted in a timely manner. It is noted that the historical infrastructure management data of the evaluation time window is provided in near real time. In detail, the evaluation time window is relative to a near-current time interval. As an example, the time interval may be relative to 10 minutes before the current time.

Thus, the method comprises the step of training 4 the anomaly detection algorithm for at least one reference time window of the plurality of sampling time windows.

Preferably, the step of training 4 the anomaly detection algorithm provides for the use of oblique decision trees, based on neural networks, on the at least one reference time window of the plurality of sampling time windows. In more detail, the step of training 4 the algorithm therefore provides for training the oblique decision trees of the vector-based IF algorithm on at least one reference time window.

The method then comprises the step of detecting anomalies 5 by performing the anomaly detection algorithm on an evaluation time window of the plurality of sampling time windows. Note that the evaluation time window is after the reference time window. Furthermore, the evaluation time window may include the time window relating to the most recently acquired historical management data.

The step of detecting anomalies 5 comprises the sub-step of defining 51 a respective input vector for each data point of a first number of consecutive data points of the evaluation time window, as a function of the plurality of metrics. Each vector comprises a second number of data points representing these metrics. That is, each vector comprises a number of elements representing metrics associated with a second number of data points.

It should therefore be noted that the defining 51 step provides for defining a plurality of input vectors equal to the first number of data points.

In accordance with the preferred embodiment of the invention, the step of detecting anomalies 5 comprises, before the sub-step of defining 51, the further sub-step of providing 50 a total number of data points for each sampling time window.

Preferably the first number of data points for which the respective input vectors are defined is calculated as a function of the total number of data points and the second number of data points. More preferably, the first number of data points is defined by the difference between the total number of data points and the second number of data points, plus one. Advantageously, it is therefore possible to interrelate the values of the metrics to the respective time behaviour, constructing a number of input vectors capable of effectively representing the time evolution of the metrics in the respective time window.

In other words, each vector is constructed comprising n elements, i.e. the values of the metrics associated with a number n of data points, less than the total number m of data points of the evaluation time window. In detail, m-n+1 vectors, each comprising a number n of elements, are constructed. In fact, each input vector, constructed from a predetermined data point, comprises n elements from that data point. In this way, it is possible to obtain a number of input vectors capable of understanding the data related to all the data points of the evaluation time window, in order to evaluate the time evolution of the data, and in particular of the data-related metrics, in the entire time window.

Further, the anomaly detecting step 5 comprises the sub-step of detecting anomalies 62 using the anomaly detection algorithm for each input vector.

The anomalies detected include a deviation between the metrics related to the evaluation time window and the metrics related to the at least one reference time window. It should be noted that the deviation can be related to the exceeding of a predefined minimum or maximum threshold by the metrics related to a single data point, repeated for a predetermined number of consecutive time windows. Alternatively, or additionally, the deviation may be relative to the time variation of the metrics relating to several consecutive data points of an input vector, observed in the evaluation time window, with respect to the time evolution of the respective metrics relating to the reference time window. In other words, the deviation may be related to the point variation and/or the variation in the time evolution of the metrics related to the evaluation time window with respect to the reference time window. In more detail, the point anomalies detected are characterized by the time variation of the metrics at the extremes of the statistical distribution of the time evolution of the respective metrics relating to the reference time window. Being at the extremes of the statistical distribution can be associated with the deviation exceeding a predefined maximum threshold.

Preferably, the anomaly detection algorithm receives input on the metrics related to the historical system data and the metrics related to the historical application data in order to detect anomalies between the historical system data and the historical application data.

Finally, the step of detecting anomalies 5 comprises the sub-step of defining 53 an output vector as a function of the anomalies detected in the infrastructure in the evaluation time window. It should be noted that in the presence of point anomalies of the metrics, the output vector comprises a single element relating to the value associated with the metrics and to the data point at which the anomaly was identified for those metrics. In more detail, in the presence of a vector-based IF algorithm of the Random Forest Classifier type, the method associates with the respective input vectors of each metric an output vector comprising a single binary element, the value of which can be associated with a normal value or an anomalous value. Alternatively, it is possible to define an output vector comprising respective elements relating to each time stamp, i.e. to each element, of each input vector. Still alternatively, in the presence of a vector-based IF algorithm of the Random Forest Regression type, the output vector is representative of an interpolation of the elements of the input vectors.

According to the preferred embodiment of the invention, the historical data of the infrastructure may comprise one or more series of data defined by algebraic transformations such as sum, average or any statistic of the historical resource application or use data, or a grouping thereof obtained by exploiting the topological allocation data. Advantageously, the use of oblique decision trees in the vector-based IF algorithm for anomaly detection, allows separating the input vectors based on a linear combination of two or more metrics. Thus, it is possible to detect the anomalies more quickly, by speeding up the detection process. In addition, the anomalies can be isolated more easily, and the accuracy of the method is higher. It should be noted that the generated oblique decision trees have a significantly reduced depth on average compared to traditional non-oblique decision trees. In fact, the separation condition required for anomaly isolation involves using a linear combination of metrics, rather than comparing a single metric to a threshold value.

In accordance with one embodiment of the invention, the step of providing 1 a database comprises the sub-step of acquiring 101 the system data by means of an infrastructure monitoring system. Preferably, the infrastructure monitoring system comprises one or more of racks, physical network devices, monitored network nodes, or aggregates thereof. Always preferably, system data related to the use of infrastructure resources comprise data related to one or more CPU, RAM, hard disk, network, storage elements.

Preferably, the step of providing 1 a database comprises the sub-step of acquiring 102 the application data by means of a monitoring system of at least one of the components of the infrastructure. Always preferably, application data comprise one of the following: the number of registered users, number of sessions, number of requests received, number or type of unsuccessful requests.

Still preferably, the step of providing 1 a database comprises the sub-step of acquiring 103 the topological allocation data using an infrastructure management system. Still preferably, the infrastructure management system comprises a load balancer consisting of virtual instance groups and/or a virtual instance group in replication configuration for improving the reliability of the stored information. Still preferably, the topological allocation data comprise data related to the allocation of instances of virtual machines on physical elements of the infrastructure and/or to the logical topology of the distributed virtual instances.

In accordance with the preferred embodiment of the invention, the step of providing 1 a database comprises the further sub-step of providing 12 a data dimensionality reduction algorithm resident in the control unit.

Preferably, the step of providing 1 a database additionally comprises the further sub-step of calculating (13) a finite number of metrics representative of the behaviour of the plurality of metrics by performing the data dimensionality reduction algorithm, inputting the plurality of metrics to the algorithm.

In accordance with a preferred embodiment of the invention, the data dimensionality reduction algorithm comprises a feature reduction algorithm. Preferably, the feature reduction algorithm allows for identifying and partitioning related metrics of a respective set and, for metrics of the same set with high correlation factor, e.g. 0.95, selecting only one significant metric. Note that a set of metrics comprises metrics of the same type. As an example, for the set of system metrics, a first set may contain metrics related to data related to CPU usage while a second set may contain metrics related to data related hard disk usage.

Preferably, the data dimensionality reduction algorithm comprises an algorithm based on a Principal Component Analysis type technique to obtain the finite number of metrics.

In the context of the present invention, PCA technique means a technique capable of transforming data from a high dimension space into a smaller dimension space, in such a way that the transformed data, i.e. the main components, maintain some significant statistical properties of the original data.

It should be noted that this technique therefore makes it possible to represent a series of metrics by summarising their behaviour or main characteristics.

Note that the PCA technique works on the condition that, while data present in a high-dimensional space is transformed into data in a smaller-dimensional space, the variance or spread of the data in the lower-dimensional space is maximized. In other words, the principal components selected for the transformed data are substantially linear combinations of the original data.

Preferably, the metrics of the plurality of metrics are analysed using the PCA technique. More preferably, the set of system metrics and the set of application metrics are analysed. Even more preferably, the selected metrics of the set of system and application metrics are analysed by the feature reduction algorithm.

Also preferably, the PCA technique divides the metrics into groups and, for each group, identifies a single common characteristic, i.e. a main component. Thus, the algorithm generates a finite number of principal components representing a linear combination of the original metrics. Preferably, main components are identified 10.

Preferably, all the metrics are represented on a heat map as a function of the main components and metrics with high variance are selected, for example values with variance greater than 0.9. Thus, a finite number of metrics representative of the behaviour of the metrics of the plurality of metrics may be obtained.

Preferably, the finite number of metrics obtained by the PCA technique is between 5 and 10. More preferably, the finite number of metrics is 6.

In accordance with the preferred embodiment of the invention, the method further comprises the step of classifying 6 the output vector into a severity class by using a serverless scalable processing. Preferably, the scalable processing uses a ticket management type system.

Within the scope of this description, a ticket management system is a system capable of generating a report and transmitting this report to infrastructure operators and/or an automated anomaly resolution centre based on the severity of the anomaly detected.

Preferably, the output vector is classified into the severity class on the basis of a severity scale, comprising a plurality of levels in order of severity. In detail, this scale comprises a low level, manageable by an automated anomaly resolution centre, a medium level and a high level.

According to the preferred embodiment of the invention, the step of classifying 6 the output vector comprises the sub-step of generating 61 a report by means of the ticket management system as a function of the severity class of the output vector.

Preferably, the report is initially analysed by the infrastructure staff. Preferably still, in case of a low severity level, the report is transmitted to the automated anomaly resolution centre. Still preferably, there is an update release or load transfer afterwards. Alternatively, in the event of higher levels of criticality, following criticalities due, for example, to system interruptions, a ticket is generated and transmitted to the infrastructure operators, in order to signal the need for actions necessary to solve the problem of the interruption, identifying the causes.

In other words, it is therefore possible to classify the anomalies detected in order to generate and transmit the report to the most appropriate personnel or, in case of low severity, to an automated centre, in such a way as not to overload the infrastructure operators.

## Claims

1. A method for detecting anomalies in an infrastructure for Network Function Virtualization, said method comprising the following steps:
- providing (1) a database containing historical infrastructure management data, the data being acquired in a plurality of consecutive sampling time windows, each sampling time window comprising a plurality of consecutive data points, the step of providing (1) comprising the sub-step of defining (11) a plurality of metrics relating to the historical infrastructure management data;
- providing (2) a control unit in signal communication with the database;
- providing (3) an anomaly detection algorithm residing in the control unit;
- training (4) the anomaly detection algorithm for at least one reference time window of the plurality of sampling time windows;
- detecting anomalies (5) by performing the anomaly detection algorithm on an evaluation time window the plurality of sampling time windows, the detected anomalies comprising a deviation between the metrics relating to the evaluation time window and the metrics relating to the at least one reference time window;
**characterized in that:**
- the anomaly detection algorithm comprises an algorithm of the vector-based Isolation Forest type, and
- the step of detecting anomalies (5) comprises the sub-steps of:
- providing (50) a total number of data points for each sampling time window;
- defining (51) a respective input vector for each data point of a first number of consecutive data points of the evaluation time window as a function of the plurality of metrics, each vector comprising a second number of data points representing said metrics, wherein the first number of data points is calculated as a function of the total number of data points and the second number of data points;
- detecting anomalies (52) by means of said anomaly detection algorithm for each input vector;
- defining (53) an output vector as a function of the anomalies detected in the infrastructure in the evaluation time window.

2. Method according to claim 1, wherein:
- the historical infrastructure management data include:
- system data relating to the use of infrastructure resources, said resources comprising one of the following: CPUs, hard disks, networks, storage elements;
- application data relating to infrastructure components, said application data comprising one of the following: the number of registered users, number of sessions, number of requests received, number or type of unsuccessful requests;
- topological allocation data related to the allocation of virtual instances on physical elements of the infrastructure, to the logical topology of the distributed virtual instances.

3. Method according to claim 2, wherein the step of providing (1) a database comprises the further sub-steps of:
- acquiring (101) the system data by means of an infrastructure monitoring system;
- acquiring (102) the application data by means of a monitoring system of at least one of the infrastructure components;
- acquiring (103) the topological allocation data by means of an infrastructure management system.

4. Method according to any one of claims 1 to 3, wherein the step of providing (1) a database containing historical infrastructure management data comprises the further substeps of:
- providing (12) a data dimensionality reduction algorithm residing in the control unit;
- calculating (13) a finite number of metrics representative of the behaviour of the plurality of metrics by executing the data dimensionality reduction algorithm, providing as input to the algorithm the plurality of metrics.

5. Method according to claim 4, wherein the data dimensionality reduction algorithm comprises an algorithm based on a Principal Component Analysis type technique to obtain the finite number of metrics.

6. Method according to claim 4 or 5, wherein the finite number of metrics is between 5 and 10, preferably 6.

7. Method according to any of claims 1 to 6, wherein the step of training (4) the anomaly detection algorithm comprises the sub-step of employing oblique decision tree type algorithms on the at least one reference time window of the plurality of sampling time windows.

8. Method according to any of claims 1 to 7, comprising the further steps of:
- classifying (6) the output vector in a severity class by using a serverless-based scalable processing architecture, said scalable processing architecture using a ticket management type system.

9. Method according to claim 8, wherein the step of classifying (6) the output vector comprises the sub-step of generating (61) a signal by means of the ticket management system as a function of the severity class of the output vector.

## Patentansprüche

1. Verfahren zum Detektieren von Anomalien in einer Infrastruktur für Netzwerkfunktionsvirtualisierung, wobei das Verfahren die folgenden Schritte umfasst:
o Bereitstellen (1) einer Datenbank, die historische Infrastrukturverwaltungsdaten enthält, wobei die Daten in einer Vielzahl von aufeinanderfolgenden Abtastzeitfenstern erfasst werden, wobei jedes Abtastzeitfenster eine Vielzahl von aufeinanderfolgenden Datenpunkten umfasst, wobei der Schritt des Bereitstellens (1) den Unterschritt des Definierens (11) einer Vielzahl von Metriken umfasst, die sich auf die historischen Infrastrukturverwaltungsdaten beziehen;
o Bereitstellen (2) einer Steuereinheit in Signalkommunikation mit der Datenbank;
o Bereitstellen (3) eines Anomaliedetektionsalgorithmus, der in der Steuereinheit residiert;
o Trainieren (4) des Anomaliedetektionsalgorithmus für mindestens ein Referenzzeitfenster der Vielzahl von Abtastzeitfenstern;
o Detektieren von Anomalien (5) durch Ausführen des Anomaliedetektionsalgorithmus an einem Auswertungszeitfenster der Vielzahl von Abtastzeitfenstern, wobei die detektierten Anomalien eine Abweichung zwischen den Metriken, die sich auf das Auswertungszeitfenster beziehen, und den Metriken, die sich auf das mindestens eine Referenzzeitfenster beziehen, umfassen; **dadurch gekennzeichnet, dass:**
∘ der Anomaliedetektionsalgorithmus einen Algorithmus des vektorbasierten Isolation-Forest-Typs umfasst, und
∘ der Schritt des Detektierens von Anomalien (5) die folgenden unterschritte umfasst:
▪ Bereitstellen (50) einer Gesamtzahl von Datenpunkten für jedes Abtastzeitfenster;
▪ Definieren (51) eines jeweiligen Eingabevektors für jeden Datenpunkt einer ersten Anzahl von aufeinanderfolgenden Datenpunkten des Auswertungszeitfensters in Abhängigkeit von der Vielzahl von Metriken, wobei jeder Vektor eine zweite Anzahl von Datenpunkten umfasst, die die genannten Metriken repräsentieren, wobei die erste Anzahl von Datenpunkten in Abhängigkeit von der Gesamtzahl von Datenpunkten und der zweiten Anzahl von Datenpunkten berechnet wird;
- Detektieren von Anomalien (52) mittels des genannten Anomaliedetektionsalgorithmus für jeden Eingabevektor;
▪ Definieren (53) eines Ausgabevektors in Abhängigkeit von den in der Infrastruktur im Auswertungszeitfenster detektierten Anomalien.

2. Verfahren nach Anspruch 1, wobei: die historischen Infrastrukturverwaltungsdaten Folgendes einschließen:
o Systemdaten, die sich auf die Nutzung von Infrastrukturressourcen beziehen, wobei die genannten Ressourcen eines der folgenden umfassen: CPUs, Festplatten, Netzwerke, Speicherelemente;
o Anwendungsdaten, die sich auf Infrastrukturkomponenten beziehen, wobei die genannten Anwendungsdaten eines der folgenden umfassen: die Anzahl registrierter Benutzer, die Anzahl von Sitzungen, die Anzahl empfangener Anfragen, die Anzahl oder Art erfolgloser Anfragen;
o topologische Zuordnungsdaten, die sich auf die Zuordnung von virtuellen Instanzen auf physischen Elementen der Infrastruktur, auf die logische Topologie der verteilten virtuellen Instanzen beziehen.

3. Verfahren nach Anspruch 2, wobei der Schritt des Bereitstellens (1) einer Datenbank die weiteren unterschritte umfasst:
o Erfassen (101) der Systemdaten mittels eines Infrastrukturüberwachungssystems;
o Erfassen (102) der Anwendungsdaten mittels eines Überwachungssystems von mindestens einer der Infrastrukturkomponenten;
o Erfassen (103) der topologischen Zuordnungsdaten mittels eines Infrastrukturverwaltungssystems.

4. Verfahren nach einem der Ansprüche 1 bis 3, wobei der Schritt des Bereitstellens (1) einer Datenbank, die historische Infrastrukturverwaltungsdaten enthält, die weiteren unterschritte umfasst:
o Bereitstellen (12) eines Algorithmus zur Daten-Dimensionalitätsreduktion, der in der Steuereinheit residiert;
o Berechnen (13) einer endlichen Anzahl von Metriken, die für das Verhalten der Vielzahl von Metriken repräsentativ sind, durch Ausführen des Algorithmus zur Daten-Dimensionalitätsreduktion, wobei dem Algorithmus die Vielzahl von Metriken als Eingabe bereitgestellt wird.

5. Verfahren nach Anspruch 4, wobei der Algorithmus zur Daten-Dimensionalitätsreduktion einen Algorithmus umfasst, der auf einer Technik vom Typ Hauptkomponentenanalyse basiert, um die endliche Anzahl von Metriken zu erhalten.

6. Verfahren nach Anspruch 4 oder 5, wobei die endliche Anzahl von Metriken zwischen 5 und 10, vorzugsweise 6, liegt.

7. Verfahren nach einem der Ansprüche 1 bis 6, wobei der Schritt des Trainierens (4) des Anomaliedetektionsalgorithmus den Unterschritt des Anwendens von Algorithmen vom Typ schiefer Entscheidungsbaum auf das mindestens eine Referenzzeitfenster der Vielzahl von Abtastzeitfenstern umfasst.

8. Verfahren nach einem der Ansprüche 1 bis 7, umfassend die weiteren Schritte:
o Klassifizieren (6) des Ausgabevektors in eine Schweregradklasse unter Verwendung einer serverless-basierten skalierbaren Verarbeitungsarchitektur, wobei die genannte skalierbare Verarbeitungsarchitektur ein Ticket-Verwaltungssystem verwendet.

9. Verfahren nach Anspruch 8, wobei der Schritt des Klassifizierens (6) des Ausgabevektors den Unterschritt des Erzeugens (61) eines Signals mittels des Ticket-Verwaltungssystems in Abhängigkeit von der Schweregradklasse des Ausgabevektors umfasst.

## Revendications

1. Procédé de détection d'anomalies dans une infrastructure de Virtualisation de Fonctions Réseau, ledit procédé comprenant les étapes suivantes :
∘ La fourniture (1) d'une base de données contenant des données historiques de gestion d'infrastructure, les données étant acquises dans une pluralité de fenêtres temporelles d'échantillonnage consécutives, chaque fenêtre temporelle d'échantillonnage comprenant une pluralité de points de données consécutifs, l'étape de fourniture (1) comprenant la sous-étape de définition (11) d'une pluralité de métriques relatives aux données historiques de gestion d'infrastructure ;
∘ La fourniture (2) d'une unité de commande en communication de signal avec la base de données ;
∘ La fourniture (3) d'un algorithme de détection d'anomalies résidant dans l'unité de commande ;
∘ L'apprentissage (4) de l'algorithme de détection d'anomalies pour au moins une fenêtre temporelle de référence de la pluralité de fenêtres temporelles d'échantillonnage ;
∘ La détection d'anomalies (5) en exécutant l'algorithme de détection d'anomalies sur une fenêtre temporelle d'évaluation de la pluralité de fenêtres temporelles d'échantillonnage, les anomalies détectées comprenant un écart entre les métriques relatives à la fenêtre temporelle d'évaluation et les métriques relatives à l'au moins une fenêtre temporelle de référence ; **caractérisé en ce que** :
∘ L'algorithme de détection d'anomalies comprend un algorithme du type Forêt d'Isolement à base de vecteurs, et
∘ L'étape de détection d'anomalies (5) comprend les sous-étapes de :
▪ La fourniture (50) d'un nombre total de points de données pour chaque fenêtre temporelle d'échantillonnage ;
▪ La définition (51) d'un vecteur d'entrée respectif pour chaque point de données d'un premier nombre de points de données consécutifs de la fenêtre temporelle d'évaluation en fonction de la pluralité de métriques, chaque vecteur comprenant un second nombre de points de données représentant lesdites métriques, dans lequel le premier nombre de points de données est calculé en fonction du nombre total de points de données et du second nombre de points de données ;
▪ La détection d'anomalies (52) au moyen dudit algorithme de détection d'anomalies pour chaque vecteur d'entrée ;
▪ La définition (53) d'un vecteur de sortie en fonction des anomalies détectées dans l'infrastructure dans la fenêtre temporelle d'évaluation.

2. Procédé selon la revendication 1, dans lequel : les données historiques de gestion d'infrastructure incluent :
∘ Des données systèmes relatifs à l'utilisation de ressources d'infrastructure, lesdites ressources comprenant l'un des éléments suivants : des CPU, des disques durs, des réseaux, des éléments de stockage ;
∘ Des données d'application relatives à des composants d'infrastructure, lesdites données d'application comprenant l'un des éléments suivants : le nombre d'utilisateurs enregistrés, le nombre de sessions, le nombre de requêtes reçues, le nombre ou le type de requêtes infructueuses ;
∘ Des données d'allocation topologique relatives à l'allocation d'instances virtuelles sur des éléments physiques de l'infrastructure, à la topologie logique des instances virtuelles distribuées.

3. Procédé selon la revendication 2, dans lequel l'étape de fourniture (1) d'une base de données comprend les sous-étapes supplémentaires de :
∘ L'acquisition (101) des données système au moyen d'un système de surveillance d'infrastructure ;
∘ L'acquisition (102) des données d'application au moyen d'un système de surveillance d'au moins un des composants de l'infrastructure ;
∘ L'acquisition (103) des données d'allocation topologique au moyen d'un système de gestion d'infrastructure.

4. Procédé selon l'une quelconque des revendications 1 à 3, dans lequel l'étape de fourniture (1) d'une base de données contenant des données historiques de gestion d'infrastructure comprend les sous-étapes supplémentaires de :
∘ La fourniture (12) d'un algorithme de réduction de dimensionnalité de données résidant dans l'unité de commande ;
∘ Le calcul (13) d'un nombre fini de métriques représentatives du comportement de la pluralité de métriques en exécutant l'algorithme de réduction de dimensionnalité de données, en fournissant en entrée à l'algorithme la pluralité de métriques.

5. Procédé selon la revendication 4, dans lequel l'algorithme de réduction de dimensionnalité de données comprend un algorithme basé sur une technique du type Analyse en Composantes Principales pour obtenir le nombre fini de métriques.

6. Procédé selon la revendication 4 ou 5, dans lequel le nombre fini de métriques est compris entre 5 et 10, de préférence 6.

7. Procédé selon l'une quelconque des revendications 1 à 6, dans lequel l'étape d'apprentissage (4) de l'algorithme de détection d'anomalies comprend la sous-étape d'emploi d'algorithmes du type arbre de décision oblique sur l'au moins une fenêtre temporelle de référence de la pluralité de fenêtres temporelles d'échantillonnage.

8. Procédé selon l'une quelconque des revendications 1 à 7, comprenant les étapes supplémentaires de :
o La classification (6) du vecteur de sortie dans une classe de gravité en utilisant une architecture de traitement évolutive sans serveur, ladite architecture de traitement évolutif utilisant un système du type gestion de tickets.

9. Procédé selon la revendication 8, dans lequel l'étape de classification (6) du vecteur de sortie comprend la sous-étape de génération (61) d'un signal au moyen du système de gestion de tickets en fonction de la classe de gravité du vecteur de sortie.
